**Europäisches Patentamt**

**European Patent Office**

**Office européen des brevets**

(19)

(11) Veröffentlichungsnummer: **0 027 637**
**B1**

(12)   **EUROPÄISCHE PATENTSCHRIFT**

(45) Veröffentlichungstag der Patentschrift:
**09.02.83**

(51) Int. Cl.³: **C 09 B 49/00, C 09 B 67/54**

(21) Anmeldenummer: **80106291.0**

(22) Anmeldetag: **16.10.80**

(54) Verfahren zur Isolierung von Schwefelfarbstoffen aus natriumpolysulfidhaltigen wässrigen Rohschmelzen sowie die isolierten Schwefelfarbstoffe.

(30) Priorität: **22.10.79 DE 2942591**

(43) Veröffentlichungstag der Anmeldung:
**29.04.81 Patentblatt 81/17**

(45) Bekanntmachung des Hinweises auf die Patenterteilung:
**09.02.83 Patentblatt 83/6**

(84) Benannte Vertragsstaaten:
**DE FR GB IT**

(56) Entgegenhaltungen:
**DE-A-1 569 741**
**D-A-2 334 005**
**DE-B-1 078 717**
**DE-B-1 111 594**
**DE-B-1 119 818**

(73) Patentinhaber: **CASSELLA Aktiengesellschaft, Hanauer Landstrasse 526, D-6000 Frankfurt am Main 61 (DE)**

(72) Erfinder: **Daniek, Georg, Lauterbacher Strasse 27, D-6000 Frankfurt am Main 61 (DE)**
Erfinder: **Meyer, Artur, Dr., Weinbergstrasse 6, D-6369 Schöneck - 1 (DE)**
Erfinder: **Weidemüller, Wolf, Dr., Nordring 101, D-6000 Frankfurt am Main 60 (DE)**

(74) Vertreter: **Urbach, Hans-Georg, Dr. et al, Hanauer Landstrasse 526, D-6000 Frankfurt am Main 61 (DE)**

# Verfahren zur Isolierung von Schwefelfarbstoffen aus natriumpolysulfidhaltigen wäßrigen Rohschmelzen sowie die isolierten Schwefelfarbstoffe

Die Erfindung betrifft ein Verfahren zur Isolierung von Schwefelfarbstoffen aus natriumpolysulfidhaltigen rohen Schwefelfarbstoff-Schmelzen, die bei der Herstellung dieser Farbstoffe nach bekannten Schwefelungsverfahren, wie der Kochschmelze und der Backschmelze anfallen, sowie die gemäß dem erfindungsgemäßen Verfahren isolierten Schwefelfarbstoffe.

Schwefelfarbstoffe werden in den meisten Fällen durch direkte Schwefelung von geeigneten, bekannten organischen Verbindungen hergestellt. Die Schwefelung erfolgt in bekannter Weise durch Umsetzung mit elementarem Schwefel und einer relativ geringen Alkalimenge oder durch Reaktion mit Alkalipolysulfid. Die Reaktionen können in Gegenwart von Wasser und/oder einem organischen Lösungsmittel nach dem Verfahren der sogenannten »Kochschmelze« oder ohne jedes Lösungsmittel durch die sogenannte »Backschmelze« ausgeführt werden.

In den meisten Fällen wird nach der Schwefelung eine Isolierung der erhaltenen Schwefelfarbstoffe angeschlossen, um die Produkte vom größten Teil der bei der Schwefelung entstehenden Begleit- und Nebenprodukte, sowie von überschüssigem Schwefel, Alkalipolysulfid usw. zu befreien. Die Rohprodukte der Backschmelze werden hierzu in der Regel zunächst in Wasser aufgenommen oder mit Natronlauge aufgeschlossen, während aus den rohen Kochschmelzen zumeist das eventuell vorhandene organische Lösungsmittel weitgehend abdestilliert und durch Wasser ersetzt wird.

Es werden somit zunächst wäßrige Systeme der Rohfarbstoffe erhalten, aus denen die Farbstoffe isoliert werden müssen. Üblicherweise geschieht dies durch Luftoxidation, Aussäuern, oder durch Ausfällen mit Kochsalz, wobei die Schwefelfarbstoffe in eine filtrierfähige Form gebracht werden und anschließendes Abfiltrieren.

Eine ganze Reihe von Schwefelfarbstoffen läßt sich nach mehreren der genannten Verfahren isolieren und die Wahl des Verfahrens ist dann weniger durch die Natur und das Verhalten des Farbstoffs als durch betriebspraktische Gegebenheiten bestimmt.

So ist z. B. aus der Deutschen Auslegeschrift 1 078 717 ein Verfahren bekannt zur Gewinnung blauer Schwefelfarbstoffe durch Schwefeln von 2,4-Dinitro-4'-hydroxydiphenylamin oder dessen Gemisch mit wenig Indophenol oder Leukoindophenol, bei dem zur Gewinnung eines möglichst reinen, klar färbenden Farbstoffs das Rohprodukt zunächst in Wasser gelöst wird, die Lösung bei einem pH-Wert größer als 7 mit einem Alkali- oder Erdalkalicyanid versetzt wird und dann die so erhaltene Mischung durch Ausblasen mit Luft oxidiert wird. Anschließend wird der Farbstoff durch Zusatz von ca. 25 Gew.-% Kochsalz, bezogen auf das Gesamtgewicht der Farbstoff-Lösung, gefällt. Wie das Beispiel 1 dieser Druckschrift zeigt, werden für 95 Gew.-Teile des Schwefelfarbstoff-Ausgangsmaterials 1000 Gew.-Teile Kochsalz zur Fällung benötigt. Bezogen auf das Gewicht des erhaltenen Farbstoffs wird somit — die sonstigen anorganischen Zusätze wie Natriumhydroxd und Natriumcyanid nicht gerechnet — die fünffache Gewichtsmenge an anorganischem Fällungsmittel benötigt. Außerdem ist es erforderlich, die Lösung zwecks Oxidation 20 Stunden lang zu belüften.

Die herkömmlichen Verfahren zur Isolierung der Schwefelfarbstoffe weisen alle gewisse wirtschaftliche, qualitative und ökologische Nachteile auf. Die Luftoxidation der natriumpolysulfidhaltigen Farbstoff-Rohschmelze erfordert lange Reaktionszeiten, wobei häufig teilweise Veränderung des Farbstoffs eintritt. Außerdem ist die Reinigung der Abluft erforderlich, um schädliche Emissionen auszuschließen. Ebenso erweist sich beim Aussäuerungsverfahren die Abluft-Reinigung als notwendig. Dazu kommt der große Materialeinsatz an z. B. Mineralsäuren wie Salzsäure oder Schwefelsäure. Beim Aussalzverfahren von Schwefelfarbstoffen aus den Alkalipolysulfid enthaltenden wäßrigen Rohschmelzen wird üblicherweise ein Mehrfaches des Gewichts an Kochsalz, bezogen auf den Reinfarbstoff, eingesetzt, was wiederum einen großen Materialeinsatz bedingt. Ein weiterer Nachteil dieses Verfahrens ist die starke Salzlast im Filtrat des Farbstoffs. Außerdem ist häufig zur Verringerung des Salzgehalts im isolierten Farbstoff ein erneutes Anschlämmen und Filtrieren des Produkts erforderlich.

Es wurde nun gefunden, daß man Schwefelfarbstoffe, die bisher aus den Rohschmelzen unter Zusatz großer Salzmengen isoliert wurden, auf überraschend elegante Weise dadurch in eine filtrierbare Form überführen kann, daß man den Rohschmelzen $10^{-4}$ bis 1 Gewichtsprozent, vorzugsweise $10^{-2}$ bis 1 Gewichtsprozent, bezogen auf die Farbstoffmenge eines organischen Flockungshilfsmittels zusetzt.

Erfindungsgemäß verwendbar sind organische Flockungshilfsmittel auf der Basis von Alkali-polyacrylaten und -polymethacrylaten, Polyacrylamid, Polymethacrylamid gegebenenfalls N-alkylierten oder -quaternierten Poly-aminoalkylacrylaten oder -methacrylaten, Polyäthylenoxid, Polyäthyienimin sowie von Derivaten dieser Polymeren, wie z. B. Verseifungs- und Teilverseifungsprodukten oder Quaternierungsprodukten. Auch Copolymere der den genannten Polymeren zugrunde liegenden Monomeren kommen als Flockungshilfsmittel in Betracht. Als N-alkylierte Poly-aminoalkylacrylate oder -methacrylate kommen insbesondere Polymere auf der Basis von N-Methylaminoalkyl-acrylaten mit 2 bis 4 Alkyl-C-Atomen, N-Dimethylamino-alkyl-arylaten mit 2 bis 4 Alkyl-C-Atomen, N-Methylaminoalkyl-methacrylaten mit 2 bis 4 Alkyl-C-Atomen, N-Dimethyl-amino-alkyl-methacrylaten mit 2 bis 4 Alkyl-C-Atomen und ihre durch Umsetzung mit einer geeigneten Säure, insbesondere Essigsäure erhältlichen Quaternierungsprodukte in Betracht.

Bevorzugt für den erfindungsgemäßen Einsatz sind Polymerisate und Copolymerisate der Acrylsäure und Methacrylsäure und ihrer Alkalisalze, insbesondere des Natriumsalzes, des Acrylamids und des Acrylsäure- oder Methacrylsäuredimethylaminoäthylesters und deren Teilverseifungs- oder Quaternierungsprodukte.

Beispiele für geeignete, im Handel erhältliche Flockungsmittel sind: ®Hercofloc (Hercules), ®Hydropur (Cassella AG), Magrafloc und ®Zetag (Allied Colloids Manufacturing), ®Nalco (Nalco), ®Praestol (Chemische Fabrik Stockhausen), ®Sedipur (BASF), ®Superfloc (Am. Cyanamid).

Es erweist sich als zweckmäßig, das Flockungsmittel in Form einer 0,01- bis 1,0gewichtsprozentigen wäßrigen Lösung zuzusetzen. Nach der Ausfällung des Farbstoffs wird dieser in an sich bekannter Weise z. B. durch Filtration isoliert. Die Isolierung von Schwefelfarbstoffen unter Einschluß der erfindungsgemäßen Fällungsoperation besteht somit aus folgenden Schritten:

- Herstellen der natriumpolysulfidhaltigen wäßrigen Rohschmelze des Schwefelfarbstoffs mit einer Temperatur von 20 bis 100° C, vorzugsweise 30—70° C,
- Versetzung dieser Rohschmelze mit $10^{-4}$ bis 1 Gewichtsprozent eines der genannten Flockungshilfsmittel unter Rühren, wobei das Flockungshilfsmittel in Form einer 0,01- bis 1,0gewichtsprozentigen wäßrigen Lösung zugesetzt wird,
- Nachrühren der Flockungshilfsmittel enthaltenden Rohschmelze während 0,5 bis 5 Stunden,
- Filtrieren der entstandenen Suspension über ein geeignetes Filtriergerät, wie Filterpresse, Sauger, Drehfilter usw.
- Nachwaschen des Filterkuchens zur Entfernung der Mutterlauge aus dem Kuchen.

Mittels dieses Verfahrens ist es somit möglich, Schwefelfarbstoffe, die bisher durch Zusatz großer Mengen von Salz in eine filtrierbare Form überführt wurden, aus natriumpolysulfidhaltigen wäßrigen Rohschmelzen zu isolieren, wobei das neue Verfahren gegenüber dem herkömmlichen Verfahren folgende Vorteile aufweist:

- geringster Materialeinsatz,
- kurze Reaktionszeit,
- nur eine Filtration erforderlich,
- keine Qualitätseinbuße durch das Verfahren der Isolierung,
- keine Abluftverunreinigung,
- keine durch das Verfahren der Isolierung geschaffenen zusätzlichen Abwasserverunreinigungen.

Es war nicht vorhersehbar und überaus überraschend, daß es gelingt, durch Zusatz relativ sehr kleiner Mengen wasserlöslicher organischer Polymere große Mengen von Schwefelfarbstoffen auszufällen, wozu bisher Salzmengen erforderlich waren, die sich in der Größenordnung der anfallenden Farbstoffmenge und darüber bewegten.

Die erfindungsgemäß isolierten Schwefelfarbstoffe enthalten wesentlich geringere Mengen von Verunreinigungen als die nach dem bisherigen Verfahren isolierten und sie sind praktisch frei von Salzen. Sie sind daher besonders gut für die Herstellung kochkonzentrierter Farbstoffzubereitungen geeignet.

Die folgenden Ausführungsbeispiele veranschaulichen das erfindungsgemäße Verfahren.

Beispiel 1

2200 g einer 9gew.-%igen natriumpolyulfidhaltigen wäßrigen Schwefelfarbstoff-Rohschmelze, die nach der Umsetzung von 3-(4-Oxanilino)-carbazol mit Natriumpolysulfid der Formel $Na_2S_{5,6}$ in siedendem n-Butanol und nach anschließendem Abtreiben des n-Butanols mit Wasserdampf vorliegt, werden bei 50° C unter Rühren mit 15 g einer 0,05gew.-%igen wäßrigen Lösung eines handelsüblichen Mischpolymerisats aus Acrylamid und β-Dimethylaminoäthylmethacrylat versetzt, 2 Stunden bei 50° C gerührt, filtriert und mit destilliertem Wasser gewaschen. Nach dem Trocknen erhält man 198 g des blauen Schwefelfarbstoffs, Color Index Nr. 53630.

Beispiel 2

1200 g einer 10gew.-%igen natriumpolysulfidhaltigen wäßrigen Schwefelfarbstoff-Rohschmelze, die nach der Umsetzung von 3-(4-Oxanilino)-9-äthylcarbazol mit Natriumpolysulfid der Formel $Na_2S_6$ in siedendem n-Butanol und nach anschließendem Abtreiben des n-Butanols mit Wasserdampf vorliegt, werden bei 30° C unter Rühren mit 0,02 g eines handelsüblichen Polyacrylsäurederivats mit 90% Carbonamid und 10% Carboxylgruppen in Form einer 1gew.-%igen Lösung versetzt, 1 Stunde bei 30° C gerührt, filtriert und mit destilliertem Wasser gewaschen. Nach dem Trocknen erhält man 120 g des blauen Schwefelfarbstoffs mit der Color Index Nr. 53 640.

Ebenso wie in den Beispielen 1 und 2 beschrieben, läßt sich der Schwefelfarbstoff isolieren, der bei der Umsetzung von 2-(4-Oxanilino)-naphthalin mit Natriumpolysulfid der Formel $Na_2S_{7,2}$ in n-Butanol gebildet wird. Man erhält den schwarzen Schwefelfarbstoff mit der Color Index Nr. 53 290.

## Beispiel 3

1800 g einer 18gew.-%igen natriumpolysulfidhaltigen wäßrigen Schwefelfarbstoff-Rohschmelze, die nach der Umsetzung von 3-(4-Oxyanilino)-carbazol mit Natriumpolysulfid der Formel $Na_2S_{5,9}$ in Lösungsmittel wie Äthylenglykolmonoäthyläther oder Diäthylenglykolmonoäthyläther und anschließendem Verdünnen mit Wasser vorliegt, werden bei 60°C unter Rühren mit 45 g einer 1gew.-%igen wäßrigen Lösung, einer ca. 30%igen wäßrigen Lösung eines handelsüblichen teilverseiften Polyacrylamids mit einem Verseifungsgrad von 20% versetzt, 1 Stunde bei 60°C verrührt, filtriert und mit destilliertem Wasser gewaschen. Nach dem Trocknen erhält man 324 g des blauen Schwefelfarbstoffs Color Index Nr. 53 630.

Ebenso, wie in den Beispielen 1 bis 3 beschrieben, lassen sich auch Schwefelfarbstoffe isolieren, die durch Umsetzung von Gemischen der oben beschriebenen Ausgangsverbindungen mit Natriumpolysulfid gebildet werden.

Weitere Beispiele für Schwefelfarbstoffe, die bisher durch Salzzusatz in eine filtrierfähige Form überführt wurden und mit besonderem Vorteil analog den Beispielen 1 bis 3 nach dem erfindungsgemäßen Verfahren isoliert werden können, sind der durch Schwefelung von p-(2,4-Dinitroanilino)phenol hergestellte Farbstoff C. I. Nummer 53 235 sowie der durch Schwefelung von 8-Amino-7-methyl-2-phenazinol erhaltene Farbstoff C. I. Nummer 53 720.

## Patentansprüche

1. Verfahren zur Isolierung von Schwefelfarbstoffen, die bisher durch Zusatz von Salzen in eine filtrierbare Form überführt wurden, aus mit Wasser versetzten roher Schwefelfarbstoffschmelzen, dadurch gekennzeichnet, daß der mit Wasser versetzten rohen Farbstoffschmelze $10^{-4}$ bis 1 Gew.-%, bezogen auf die Farbstoffmenge eines organischen Flockungshilfsmittels zugesetzt werden und anschließend der filtrierbare Farbstoffniederschlag in an sich bekannter Weise abgetrennt wird.

2. Verfahren gemäß Anspruch 1, dadurch gekennzeichnet, daß als organisches Flockungshilfsmittel eines auf Basis von Alkali-polyacrylaten und -polymethacrylaten, Polyacrylamid, Polymethacrylamid gegebenenfalls N-alkylierten oder -quaternierten Poly-aminoalkyl-acrylaten oder -methacrylaten, Polyäthylenoxid, Polyäthylenimin sowie von Derivaten dieser Polymeren wie z. B. Verseifungs- und Teilverseifungsprodukten oder Quaternierungsprodukten oder von Copolymerisaten der den obigen Polymeren zugrundeliegenden Monomeren eingesetzt wird.

3. Verfahren gemäß den Ansprüchen 1 und 2, dadurch gekennzeichnet, daß als organische Flockungshilfsmittel eines auf Basis von Polymerisaten und Copolymerisaten der Acrylsäure, Methacrylsäure, des Acrylamids und des Acrylsäure- oder Methacrylsäure-dimethylaminoäthylesters und deren Teilverseifungs- oder Quaternierungsprodukten eingesetzt wird.

4. Verfahren gemäß einem der Ansprüche 1 bis 3, dadurch gekennzeichnet, daß das Flockungshilfsmittel in einer Menge von $10^{-2}$ bis 1 Gew.-%, bezogen auf die Farbstoffmenge, eingesetzt wird.

5. Die nach dem Verfahren der Ansprüche 1 bis 4 isolierten Schwefelfarbstoffe.

## Claims

1. Process for isolating sulphur dyestuffs, which have hitherto been converted into a filterable form by adding salts, from crude sulphur dyestuff melts to which water has been added, characterised in that $10^{-4}$ to 1% by weight, relative to the amount of dyestuff, of an organic flocculating auxiliary is added to the crude dyestuff melt to which water has been added and the filterable dyestuff precipitate is then separated off in a manner which is in itself known.

2. Process according to claim 1, characterised in that the organic flocculating auxiliary employed is an organic flocculating auxiliary based on alkali metal polyacrylates or alkali metal polymethacrylates, polyacrylamides, polymethacrylamides, optionally N-alkylated or N-quaternised poly-aminoalkyl acrylates or methacrylate, polyethylene oxide or polyethyleneimine or on derivatives of these polymers, such as saponification or partial saponification products or quaternisation products, or of copolymers of monomers on which the above polymers are based.

3. Process according to claims 1 and 2, characterised in that the organic flocculating auxiliary used is an organic flocculating auxiliary based on polymers or copolymers of acrylic acid, methacrylic acid, acrylamide or acrylic acid dimethylaminoethyl ester or methacrylic acid dimethylaminoethyl ester or partial saponification products or quaternisation products thereof.

4. Process according to one of claims 1 to 3, characterised in that the flocculating auxiliary is employed in an amount of $10^{-2}$ to 1% by weight, relative to the amount of dyestuff.

5. The sulphur dyestuffs isolated by the process of claims 1 to 4.

## Revendications

1. Procédé d'isolement de colorants au soufre, qui étaint amenés jusqu'à présent sous une forme filtrable par addition de sel, à partir de masses fondues brutes de colorant au soufre additionnée d'eau, caractérisé en ce qu'on ajoute à la masse fondue de colorant brute additionnée d'eau de $10^{-4}$ à 1% en poids, par rapport à la quantité de colorant, d'un adjuvant de floculation organiqe, puis on sépare le précipité de colorant filtrable d'une manière connue en soi.

2. Procédé suivant la revendication 1, caractérisé en ce qu'on utilise comme adjuvant de floculation organique un adjuvant à base de polyacrylates ou méthacrylates alcalins, de polyacrylamide, de polyméthacrylamide, de polyacrylates ou méthacrylates d'aminoalkyle éventuellement N-alkylés ou quaternisés, de polyoxyéthylène, de polyéthylènimine ainsi que de dérivés de ces polymères, tels que des produits de saponification et de saponification partielle ou des produits de quaternisation, ou de copolymères des monomères qui sont à la base des polymères ci-dessus.

3. Procédé suivant l'une quelconque des revendications 1 ou 2, caractérisé en ce qu'on utilise comme adjuvant de floculation organique un adjuvant à base de polymères et de copolymères de l'acide acrylique, de l'acide méthacrylique, de l'acrylamide et de l'ester diméthylaminoéthylique de l'acide acrylique ou de l'acide méthacrylique et de leurs produits de saponification partielle ou de quaternisation.

4. Procédé suivant l'une quelconque des revendications 1 à 3, caractérisé en ce que l'adjuvant de floculation est utilisé à raison de $10^{-2}$ à 1% en poids par rapport à la quantité de colorant.

5. Colorants au soufre isolés par le procédé selon l'une quelconque des revendications 1 à 4.